# FASCICULE DE BREVET EUROPEEN

(11) **EP 0 457 874 B1**
(45) Date de publication et mention de la délivrance du brevet: **20.03.1996**
(21) Numéro de dépôt: 91900266.7
(22) Date de dépôt: 04.12.1990
(51) Int. Cl.: A61C 8/00

(54) **IMPLANT DENTAIRE**
ZAHNIMPLANTAT
DENTAL IMPLANT

(30) Priorité: 12.12.1989 FR 8916385
(43) Date de publication de la demande: 27.11.1991
(73) Titulaire: PELTIER, Patrick, F-92500 Rueil-Malmaison (FR); PELTIER, Guy, F-92500 Rueil-Malmaison (FR)
(72) Inventeur: PELTIER, Patrick, F-92500 Rueil-Malmaison (FR); PELTIER, Guy, F-92500 Rueil-Malmaison (FR)
(74) Mandataire: Bernasconi, Jean
(86) Numéro de dépôt international: FR9000876
(87) Numéro de publication internationale: WO9108714

(56) Documents cités:
- EP-A- 0 263 274
- FR-A- 2 085 013

## Description

L'invention concerne les implants dentaires destinés à être implantés dans la mâchoire inférieure ou supérieure, pour servir de soutien à une prothèse dentaire, couronne ou bridge, après extraction totale d'une ou de plusieurs dents. D'une façon générale, ces implants sont formés d'une pièce insérable dans le tissu osseux et d'une tête, dite implantaire, qui vient se fixer sur la pièce insérable et qui reçoit la prothèse, qui forme le préambule de la revendication 1.

Le document FR-A-2.085.013 décrit un implant dentaire dans lequel la tête et la pièce insérable sont reliées ensemble par une rotule pour permettre l'inclinaison de la tête par rapport à la pièce insérable. Le blocage en position est assuré par une vis de blocage ou par la mise sous tension d'un lien souple tel qu'un câble. L'implant dentaire décrit dans ce document présente une structure relativement compliquée.

On a aussi proposé (US-A-4.758.161, US-A-4.276.026 et US-A-4.645.453) une tête implantaire en une seule pièce, présentant un amincissement permettant le cintrage de ladite tête. Les impératifs de résistance et de rigidité limitent l'amincissement, ce qui impose le cintrage de la tête hors de la bouche et par suite peut rendre impossible le montage d'une telle tête dans un implant situé entre deux dents, pour des raisons d'encombrement lors du vissage de la tête coudée. En outre, une partie de la tête, c'est-à-dire la base, n'est pas coudée, ce qui, notamment, se répercute de manière défavorable sur la réalisation de la prothèse.

L'invention a donc pour objectif de remédier aux inconvénients mentionnés ci-dessus en fournissant un implant dentaire pouvant être disposé de façon appropriée angulairement et circonférentiellement. Un autre objectif de l'invention est de fournir un tel implant dentaire qui soit facile à réaliser et à utiliser.

L'invention a donc pour objet un implant dentaire destiné à être implanté dans la mâchoire inférieure ou supérieure pour servir de soutien à une prothèse dentaire et comportant une pièce, telle que fût fileté, lame ou analogue, qui est insérable dans le tissu osseux de la mâchoire réceptrice pour y assurer l'ancrage de l'implant et qui comprend une partie droire , notamment cylindrique, dont une extrémité affleure à la surface de la mâchoire lorsque ladite pièce est insérée dans celle-ci, ainsi qu'une tête implantaire reliée de façon amovible à ladite pièce insérable et, dans lequel il est prévu des moyens pour assurer l'immobilisation de la tête dans ladite position appropriée et, dans la partie droite de la pièce insérable , une cavité cylindrique s'étendant concentriquement à l'axe longitudinal de ladite partie et se prolongeant dans la tête par une cavité cylindrique , concentrique à l'axe longitudinal de la tête , avec dans les cavités un élément oblong reliant la tête à la pièce insérable , caractérisé en ce que ledit élément oblong est cintrable, au voisinage du centre de la rotule lorsque l'implant est en place dans la bouche, pour conserver de lui même sa forme après cintrage, les parties libres des cavités voisines de la rotule autour dudit élément oblong pouvant être remplies, à la pose en bouche, d'un ciment dentaire ou matière analogue.

Par élément cintrable, on entend un élément qui conserve de lui-même la forme, c'est-à-dire l'inclinaison, qui lui a été conférée par courbement.

De préférence, lors du montage final de la tête, les parties libres, desdites cavités, voisines de la rotule sont remplies d'un ciment dentaire, ou autre matière, apte à être désagrégé par des moyens appropriés, notamment par les ultra-sons, en vue d'un démontage éventuel de la tête. Des ciments particulièrement appropriés sont les ciments au phosphate de zinc et, en général, tous les ciments qui ne "soudent" pas le métal constituant l'implant.

De préférence, à l'une de ses extrémités, la tête comporte une partie sphérique agencée de manière à pouvoir coopérer étroitement avec une surface de contact complémentaire, en forme de portion de sphère creuse, portée par ladite extrémité affleurante de la pièce insérable, la partie sphérique et la surface de contact réalisant ladite rotule. L'angle d'ouverture de la surface de contact sphérique, c'est-à-dire l'angle défini par les deux rayons les plus éloignés passant par le centre d'un cercle imaginaire dans lequel s'inscrit la surface de contact, est au plus égal à 180° pour permettre l'amovibilité de la liaison. On préfère que cet angle soit égal à 180° pour des raisons de résistance mécanique, donc que la surface de contact soit une demi-sphère creuse.

De préférence, les cavités prévues dans la partie droite de l'élément insérable et dans la tête implantaire, dans le prolongement l'une de l'autre, sont filetées intérieurement sur au moins une partie de leur longueur, l'élément cintrable comprend une tige cintrable portant à, ou près de, chacune de ses extrémités, un satellite, muni d'un filetage complémentaire de celui de la cavité correspondante et, à l'extrémité libre de la partie sphérique de la tête, la cavité prévue dans la tête s'élargit de façon tronconique, la rotule, les cavités et la tige cintrable étant dimensionnées de manière à pouvoir supporter une inclinaison, de la tête par rapport à la partie droite de la pièce insérable, comprise entre 0 et 30° environ.

Avant cintrage, l'élément cintrable est avantageusement symétrique par rapport à son centre afin de faciliter le travail du praticien. Les parties filetées de chaque cavité sont donc équivalentes.

De préférence, l'implant dentaire selon l'invention est entièrement fait en titane pur, de nuance dentaire. On peut aussi envisager de le réaliser en un alliage de titane, aluminium et vanadium.

L'invention va être maintenant décrite plus en détail à l'aide de modes de réalisation pris à titre d'exemples non limitatifs et se référant au dessin annexé dont :
la figure 1 montre, partiellement en coupe longitudinale médiane, la tête et une partie du fût d'un implant-vis selon un mode de réalisation de l'invention,
la figure 2 montre le même mode de réalisation qu'à la figure 1, pour un implant-lame.

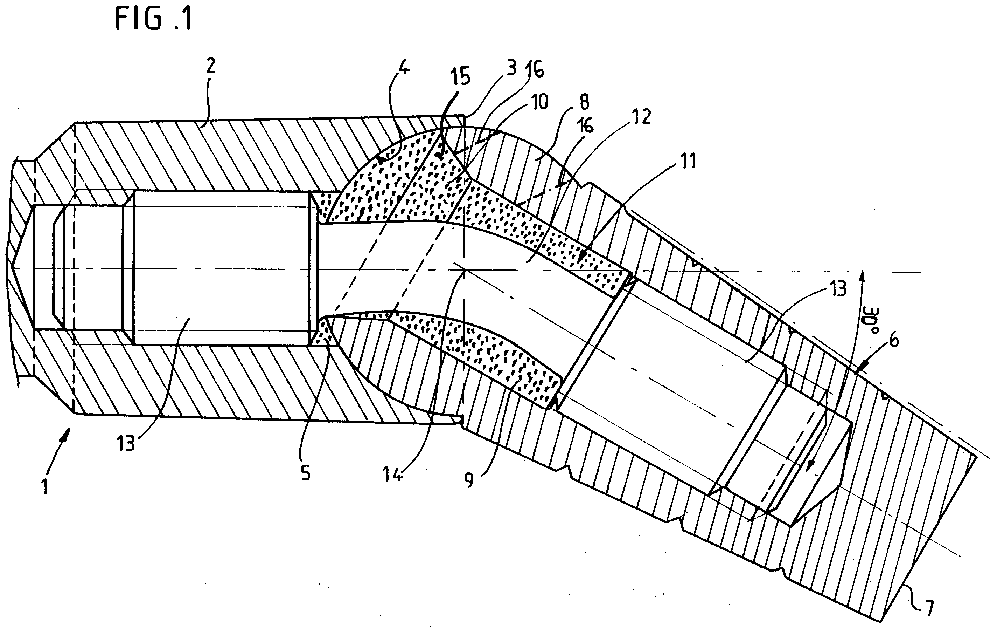

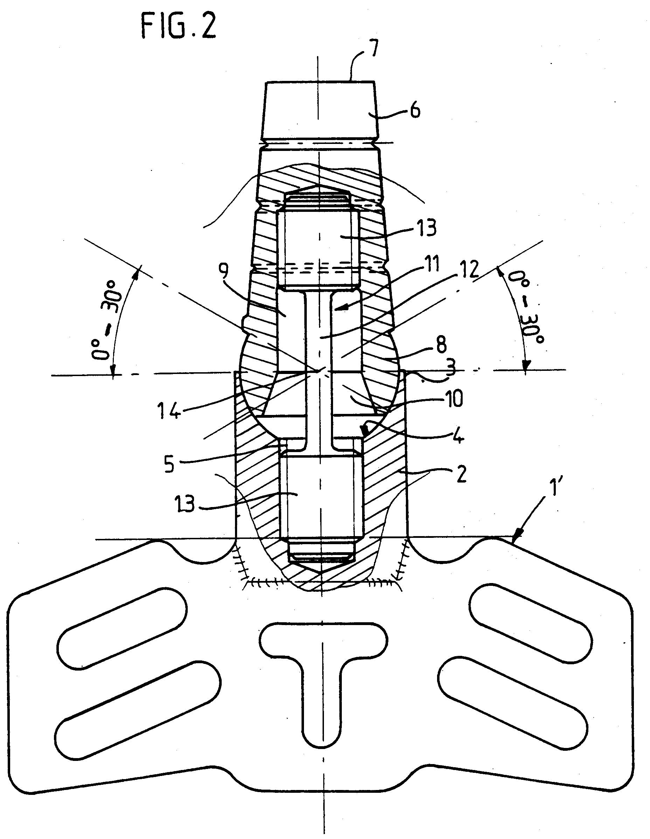

L'implant dentaire selon l'invention est réalisé en titane pur, de nuance dentaire, et comporte une pièce insérable dans la mâchoire du patient. A la figure 1, où il est question d'un implant-vis, la pièce insérable est une pièce cylindrique ou fût 1, représentée partiellement, comprenant une partie filetée usuelle et une partie non filetée 2 dont l'extrémité affleure à la surface de la mâchoire ou de la gencive lorsque le fût 1 est en place. A la figure 2, où il est question d'un implant-lame, la pièce cylindrique est remplacée par une lame usuelle 1', notamment une lame ajourée, qui est prolongée par une partie 2 identique à la partie non filetée 2 de la figure 1. A son extrémité 3 opposée à la partie filetée ou à la lame proprement dite, la partie 2 de la pièce insérable 1 ou 1' présente une surface en forme de demi-sphère creuse dite surface de contact 4. La partie 2 comporte en outre une cavité cylindrique 5 s'étendant sur sensiblement toute la longueur de ladite partie 2 et concentriquement à l'axe longitudinal de celle-ci. La cavité 5 est filetée intérieurement.

L'implant comporte en outre une tête implantaire 6 qui est la partie de l'implant qui est située hors de la mâchoire et qui reçoit la prothèse. Cette tête 6 a une forme générale tronconique avec une extrémité étroite 7 et une extrémité partiellement sphérique, appelée dans ce contexte "partie sphérique" 8. Plus précisément, cette partie sphérique 8 est un segment sphérique dont l'axe médian coïncide avec l'axe longitudinal de la tête 6. La tête 6 présente une cavité axiale 9 qui débouche à la partie sphérique 8 par un tronc de cône 10 s'évasant vers l'extérieur. La cavité axiale 9 présente un filetage intérieur.

La surface de contact 4 et la partie sphérique 8 sont dimensionnées de façon à pouvoir former une rotule dans laquelle la surface extérieure de la partie sphérique 8 coopère étroitement avec la surface de contact 4, lorsque la tête 6 et la pièce 1 ou 1' sont assemblées. L'assemblage de la tête 6 et de la pièce 1 ou 1' est assuré par un élément oblong 11 venant se visser dans chacune des cavités 5 et 9 et comprenant une tige 12 munie, à chacune de ses extrémités, d'un satellite 13 comportant un filetage complémentaire du filetage intérieur des cavités 5 et 9. L'élément oblong 11 est symétrique par rapport au centre 14 de la tige 12. Lorsque l'implant est assemblé, le centre 14 coïncide avec le centre de la rotule.

Pour le montage de la tête 6 sur la pièce insérable 1 qui a été mise en place dans la mâchoire du patient, la tige 12 est vissée à fond dans la tête 6. Le praticien présente alors l'ensemble tête 6 - tige 12 après avoir mis un ciment dentaire approprié 15 (pouvant être désagrégé par les ultra-sons) à l'extrémité de ladite tête 6, notamment dans la cavité formée par le tronc de cône 10, puis visse la tête 6 dans la pièce insérable 1, sans bloquer à fond. Il effectue ensuite le cintrage requis à l'aide d'un outil approprié, puis visse la tête à fond. Le ciment en excès, débordant de la rotule, est ensuite élimine.

L'angle de cintrage est limité par la configuration de la liaison à rotule. On peut prévoir d'utiliser un tel implant pour des angles d'inclinaison ne dépassant pas 30° environ.

En cas de besoin, la tête implantaire peut être démontée, de la manière suivante :
- Dans la partie sphérique 8, on perce un trou en biais de façon à déboucher de préférence au moins en partie dans la cavité formée par le tronc du cône 10, par exemple à l'aide d'un foret ou d'une fraise de 1 mm de diamètre. On a représenté un tel trou par des traits mixtes 16 à la figure 1, l'axe de ce trou formant un angle de 30° environ avec l'axe longitudinal de la tête 6.
- On introduit dans ce trou une aiguille à ultra-sons et l'on réduit au maximum en poudre le ciment 15 par émission d'ultra-sons.
- On élimine au maximum les poussières de ciment par le susdit trou, par exemple avec un jet d'eau stérile.
- On redresse la tête 6 (au moyen de l'outil spécial) afin de la ramener au minimum à 15° de l'axe longitudinal de la pièce insérable 1 ou 1', de préférence à moins de 10°. En effet, au delà de 15°, le dévissage de la tête 6 pourrait détériorer le bord périphérique de la surface de contact 4. De préférence, on redresse à peu près complètement la tête 6, puis on la dévisse, la tige de liaison 12 venant avec celle-ci.

En variante, si l'on préfère que la tige de liaison 12 reste sur la pièce insérable 1 ou 1', on ne redresse pas complètement la tête 6, puis on dévisse celle-ci. On redresse ensuite complètement la tige 12 et on la dévisse.
- Avant de remonter un nouvel ensemble tête-tige, on nettoie la surface de contact 4 et la cavité 5 de la pièce insérable 1 ou 1'.

L'invention a été décrite pour des implants-vis et pour des implants-lames. Il est bien entendu qu'elle peut également s'appliquer à tous les autres types d'implants dentaires utilisés, qu'ils soient endo-osseux ou juxta-osseux. Les implants juxta-osseux sont ceux pour lesquels l'implant est fixé autour de l'os et non dans celui-ci, comme c'est le cas pour les implants endo-osseux du type à lame ou à vis.

On peut aussi envisager d'utiliser l'invention dans le cas de multi-implants, pour lesquels on recourt à au moins deux implants pour soutenir la prothèse.

La tête implantaire selon l'invention peut avoir toute forme extérieure usuelle. Elle peut notamment comporter des rainures circonférentielles et/ou des surfaces de prise pour outils de serrage.

Un avantage important de l'invention est de pouvoir fournir un implant standard que le praticien ajuste en fonction du cas concerné. En outre, la standardisation de cet implant simplifie sa fabrication, facilite l'approvisionnement du praticien et réduit l'outillage nécessaire à son montage.

## Revendications

1. Implant dentaire destiné à être inplanté dans la mâchoire inférieure ou supérieure pour servir de soutien à une prothèse dentaire et comportant une pièce (1, 1'), telle que fût fileté, lame ou analogue, qui est insérable dans le tissu osseux de la mâchoire réceptrice pour y assurer l'ancrage de l'implant et qui comprend une partie droite (2), notamment cylindrique, dont une extrémité (3) affleure à la surface de la mâchoire lorsque ladite pièce (1, 1') est insérée dans celle-ci, ainsi qu'une tête implantaire (6) reliée de façon amovible à ladite pièce insérable (1, 1') et, dans lequel il est prévu des moyens pour assurer l'immobilisation de la tête (6) dans ladite position appropriée et, dans la partie droite (2) de la pièce insérable (1, 1'), une cavité cylindrique (5) s'étendant concentriquement à l'axe longitudinal de ladite partie (2) et se prolongeant dans la tête (6) par une cavité cylindrique (9), concentrique à l'axe longitudinal de la tête (6), avec dans les cavités (5 et 9) un élément oblong (11) reliant la tête (6) à la pièce insérable (1, 1'), caractérisé en ce que ledit élément oblong est cintrable, au voisinage du centre de la rotule lorsque l'implant est en place dans la bouche, pour conserver de lui même sa forme après cintrage, les parties libres des cavités (5, 9) voisines de la rotule autour dudit élément oblong (11) pouvant être remplies, à la pose en bouche, d'un ciment dentaire (15) ou matière analogue.

2. Implant dentaire selon la revendication 1, caractérisée en ce que, à l'une de ses extrémités, la tête (6) comporte une partie sphérique (8) agencée de manière à pouvoir coopérer étroitement avec une surface de contact (4) complémentaire, en forme de portion de sphère creuse, dont l'angle d'ouverture est au plus, et de préférence, égal à 180°, portée par ladite extrémité affleurante (3) de la pièce insérable (1, 1'), la partie sphérique (8) et la surface de contact (4) réalisant ladite rotule.

3. Implant dentaire selon la revendication 2, caractérisé en ce que les deux susdites cavités (5 et 9) sont filetées intérieurement sur au moins une partie de leur longueur, en ce que l'élément cintrable (11) comprend une tige cintrable (12) portant, à, ou près de, chacune de ses extrémités, un satellite (13), muni d'un filetage complémentaire de celui de la cavité (5 ou 9) et en ce que, à l'extrémité libre de la partie sphérique (8) de la tête (6), la cavité (9) s'élargit de façon tronconique, la rotule, les cavités (5 et 9) et la tige cintrable (12) étant dimensionnées de manière à pouvoir supporter une inclinaison, de la tête (6) par rapport à la partie droite (2) de la pièce insérable (1, 1'), comprise entre 0° et 30° environ.

4. Implant dentaire selon l'une quelconque des revendications 1 à 3, caractérisé en ce que, avant cintrage, l'élément cintrable (11) est symétrique par rapport à son centre (14).

5. Implant dentaire selon l'une quelconque des revendications 1 à 4, caractérisé en ce que l'implant dentaire est entièrement fait en titane pur, de nuance dentaire, ou en alliage de titane, aluminium et vanadium.

## Claims

1. Dental implant intended to be implanted in the lower or upper jaw in order to serve as a support for a dental prosthesis and comprising a member (1, 1'), such as a threaded post, plate or the like, which can be inserted in the bone tissue of the receptor jaw in order to ensure the anchoring of the implant therein and which comprises an in particular cylindrical straight part (2), whereof one end (3) is flush with the surface of the jaw when said member (1, 1') is inserted in the latter, as well as an implant head (6) detachably connected to said insertable member (1, 1') and, in which means are provided for ensuring the immobilisation of the head (6) in said appropriate position and, in the straight part (2) of the insertable member (1, 1'), a cylindrical cavity (5) extending concentrically with respect to the longitudinal axis of said part (2) and which is extended in the head (6) by a cylindrical cavity (9), concentric with the longitudinal axis of the head (6), with, in the cavities (5 and 9), an oblong member (11) connecting the head (6) to the insertable member (1, 1'), characterised in that said oblong member is able to bend, in the vicinity of the centre of the ball-and-socket joint when the implant is placed in the mouth, in order to retain per se its shape after bending, the free parts of the cavities (5, 9) adjacent to the ball-and-socket joint around said oblong member (11) being able to be filled, when placed in the mouth, with a dental cement (15) or similar material.

2. Dental implant according to Claim 1, characterised in that, at one of its ends, the head (6) comprises a spherical part (8) arranged in order to be able to cooperate closely with a complementary contact surface (4) in the form of a portion of a hollow sphere, whereof the opening angle is at the most, and preferably, equal to 180°, which contact surface is carried by said flush end (3) of the insertable member (1, 1'), the spherical part (8) and the contact surface (4) forming said ball-and-socket joint.

3. Dental implant according to Claim 2, characterised in that the two said cavities (5 and 9) are screw-threaded internally on at least part of their length, in that the bendable member (11) comprises a bendable rod (12) supporting, at, or near to, each of its ends, a satellite (13), provided with a screw-thread complementing that of the cavity (5 or 9) and in that, at the free end of the spherical part (8) of the head (6), the cavity (9) widens out in a frustoconical manner, the ball-and-socket joint, the cavities (5 and 9) and the bendable rod (12) having dimensions so as to be able to withstand an inclination of the head (6) with respect to the straight part (2) of the insertable member (1, 1'), comprised between 0° and 30° approximately.

4. Dental implant according to one of Claims 1 to 3, characterised in that, before bending, the bendable member (11) is symmetrical with respect to its centre (14).

5. Dental implant according to one of Claims 1 to 4, characterised in that the dental implant is made entirely of pure titanium, of dental colouring, or of an alloy of titanium, aluminium and vanadium.

## Patentansprüche

1. Zahnimplantat zur Implantation im Unterkiefer oder Oberkiefer zum Halten einer Zahnprothese mit einem Teil (1, 1'), beispielsweise einem Gewindeschaft, einer Zunge u. ä., das in das Knochengewebe des Kiefers einsetzbar ist, um dort die Verankerung des Implantates zu sichern, und das einen geraden, insbesondere zylindrischen Abschnitt (2) besitzt, von dem ein Ende (3) an der Fläche des Kiefers satt anliegt, wenn das Teil (1, 1') in den Kiefer eingesetzt worden ist, und einem Implantatkopf (6), der mit dem einsetzbaren Teil (1, 1') unbeweglich verbunden ist und in dem Einrichtungen vorgesehen sind, die die Unbeweglichkeit des Kopfes (6) in dieser geeigneten Position sicherstellen, sowie einem zylindrischen Hohlraum (5) im geraden Abschnitt (2) des einsetzbaren Teiles (1, 1'), der sich konzentrisch zur Längsachse des Abschnittes (2) erstreckt und sich in den Kopf (6) über einen zylindrischen Hohlraum (9) fortsetzt, der konzentrisch zur Längsachse des Kopfes (6) verläuft, wobei in den Hohlräumen (5 und 9) ein längliches Element (11) vorgesehen ist, das den Kopf (6) mit dem einsetzbaren Teil (1, 1') verbindet, dadurch gekennzeichnet, daß das längliche Element in der Nähe des Mittelpunktes des Kugelgelenkes biegbar ist, wenn sich das Implantat im Mund an Ort und Stelle befindet, und daß die freien Teile der Hohlräume (5, 9) benachbart zum Kugelgelenk um das längliche Element (11) herum bei der Anbringung im Mund mit einem Zahnzement (15) oder einem entsprechenden Material auffüllbar sind, um die Form des länglichen Elementes nach dem Verbiegen zu konservieren.

2. Zahnimplantat nach Anspruch 1, dadurch gekennzeichnet, daß der Kopf (6) an einem seiner Enden ein kugelförmiges Teil (8) aufweist, das derart angeordnet ist, daß es eng mit einer komplementären Kontaktfläche (4) zusammenwirken kann, die als Abschnitt einer Hohlkugel ausgebildet ist, deren Öffnungswinkel höchstens und vorzugsweise 180 ° groß ist und die von dem satt anliegenden Ende (3) des einsetzbaren Teiles (1, 1') gebildet wird, wobei das kugelförmige Teil (8) und die Kontaktfläche (4) das Kugelgelenk bilden.

3. Zahnimplantat nach Anspruch 2, dadurch gekennzeichnet, daß die beiden Hohlräume (5 und 9) im Inneren über mindestens einen Teil ihrer Länge mit einem Gewinde versehen sind und daß das biegbare Element (11) einen biegbaren Stift (12) aufweist, der an jedem seiner Enden oder in der Nähe davon einen Satelliten (13) trägt, welcher mit einem Gewinde versehen ist, das zu dem Gewinde des Hohlraumes (5 oder 9) komplementär ist, und daß sich am freien Ende des kugelförmigen Teiles (8) des Kopfes (6) der Hohlraum (9) kegelstumpfartig erweitert, wobei das Kugelgelenk, die Hohlräume (5 und 9) und der biegbare Stift (12) so dimensioniert sind, daß sie eine Schiefstellung des Kopfes (6) relativ zum geraden Teil (2) des einsetzbaren Teiles (1, 1') zwischen 0° und etwa 30° abstützen können.

4. Zahnimplantat nach einem der Ansprüche 1 - 3, dadurch gekennzeichnet, daß das biegbare Element (11) vor dem Verbiegen in bezug auf seinen Mittelpunkt (14) symmetrisch ausgebildet ist.

5. Zahnimplantat nach einem der Ansprüche 1 - 4, dadurch gekennzeichnet, daß es vollständig aus reinem Titan mit Zahnfarbton oder aus einer Legierung von Titan, Aluminium und Vanadium besteht.
